# EUROPEAN PATENT SPECIFICATION

(11) **EP 3 533 698 B1**
(45) Date of publication and mention of the grant of the patent: **17.03.2021**
(21) Application number: 19159026.4
(22) Date of filing: 25.02.2019
(51) Int. Cl.: B62J 50/30, B62L 1/00, B60T 5/00, B62K 25/28

(54) **BRAKE CALIPER COOLING STRUCTURE**
BREMSSATTELKÜHLSTRUKTUR
STRUCTURE DE REFROIDISSEMENT D'ÉTRIER DE FREIN

(30) Priority: 28.02.2018 JP 2018035854
(43) Date of publication of application: 04.09.2019
(73) Proprietor: Honda Motor Co., Ltd., Tokyo 107-8556 (JP)
(72) Inventor: CHENG, Yuliang, Saitama, 351-0024 (JP); TOMISAWA, Fumio, Saitama, 351-0024 (JP); SATO, Shin, Saitama, 351-0024 (JP)
(74) Representative: Weickmann & Weickmann PartmbB

(56) References cited:
- EP-A1- 1 688 343
- EP-A1- 3 141 464
- JP-A- S62 173 384
- JP-B2- 5 091 797
- US-A- 4 596 312
- US-A- 4 742 884
- US-A- 4 815 555

## Description

### Technical Field

The present invention relates to a saddled vehicle comprising a brake caliper cooling structure, particularly to a brake caliper cooling structure for efficiently cooling a rear wheel brake caliper of a saddled vehicle.

### Background Art

In a brake device including a brake disk fixed to a wheel and a brake caliper that presses a friction pad to the brake disk to generate a braking force, a structure in which the brake caliper raised in temperature by frictional heat is cooled by airflow induced by traveling of the vehicle, for obtaining a stable braking force, has been known.

JP 5 091797 B2 shows a brake caliper cooling structure according to the preamble of claim 1.

JP 2017-52352 A discloses a cooling structure in which a rear fender mounted to an upper surface of a swing arm of a motorcycle is provided with a predetermined opening, whereby air resistance due to the airflow is reduced, and the airflow is guided to a rear brake caliper disposed in the vicinity of an axle of a rear wheel.

### Summary of the Invention

### Problems to be Solved by the Invention

In the cooling structure of JP 2017-52352 A, a cooling effect is liable to vary according to variation in the airflow impinging on the rear fender. Further, in a vehicle which repeats rapid speed reduction in a closed course or in a vehicle in which the airflow is not liable to impinge on the rear fender due to the application of a cowling having a high windshield performance, the cooling effect is considered to become insufficient.

It is an object of the present invention to provide a saddle vehicle comprising a brake caliper cooling structure by which a brake caliper for a rear wheel can be efficiently cooled with a simple structure.

### Solution to Problems

The present invention provides a saddled vehicle comprising a brake caliper cooling structure according to claim 1.

In a first feature, the saddled vehicle comprises a brake caliper cooling structure containing all of the features of appended claim 1.

The present invention has a second feature in that the saddled vehicle (1) has a cowling (21) that covers side surfaces of an engine (E) disposed between the rear wheel (WR) and a front wheel (WF), and the intake port (62) of the air duct (60, 160) is located on an outer side of the cowling (21) in front view of the vehicle body.

The present invention has a third feature in that an inclined surface (63a) which is located on a transverse directionally inner side on a vehicle body lower side than on a vehicle body upper side is formed at a lower portion on a transverse directionally outer side of the air duct (60, 160).

The present invention has a fourth feature in that the lower surface (23a) of the swing arm (23) has such a shape as to extend upward along a direction toward a vehicle body rear side.

The present invention has a fifth feature in that the exhaust port (67) of the air duct (60) is located on a front side of the rear brake caliper (36), at a position on an inner side than a side surface (23b) on a transverse directionally outer side of the swing arm (23).

The present invention has a sixth feature in that the exhaust port (167) of the air duct (160) is located on a lower side of the rear brake caliper (36), at a position on an inner side than a side surface (23b) on a transverse directionally outer side of the swing arm (23).

### Effects of the Invention

According to the first feature of the present invention, saddled vehicle comprising a brake caliper cooling structure includes all of the features of appended claim 1.

Therefore, the air duct provided with the intake port and the exhaust port is provided, whereby the airflow can be made to impinge on the rear brake caliper more positively. In addition, cooling of the rear brake caliper disposed on the lower side of the swing arm is facilitated, and a lower surface of the swing arm can be protected.

According to the second feature of the present invention, the saddled vehicle (1) has a cowling (21) that covers side surfaces of an engine (E) disposed between the rear wheel (WR) and a front wheel (WF), and the intake port (62) of the air duct (60, 160) is located on an outer side of the cowling (21) in front view of the vehicle body. Therefore, the airflow not influenced by the engine heat can be introduced into the intake port of the air duct, to thereby effectively cool the rear brake caliper.

According to the third feature of the present invention, an inclined surface (63a) which is located on a transverse directionally inner side on a vehicle body lower side than on a vehicle body upper side is formed at a lower portion on a transverse directionally outer side of the air duct (60, 160). Therefore, grounding of the air duct is not liable to occur even when the saddled vehicle banks deeply at the time of cornering, so that the air duct can be mounted without reducing a maximum bank angle.

According to the fourth feature of the present invention, the lower surface (23a) of the swing arm (23) has such a shape as to extend upward along a direction toward a vehicle body rear side. Therefore, the height size of that portion of the swing arm which is near a pivot is increased, rigidity thereof is enhanced, and the airflow becoming not liable to impinge on the rear brake caliper due to this shape can be positively guided to the rear brake caliper by the air duct.

According to the fifth feature of the present invention, the exhaust port (67) of the air duct (60) is located on a front side of the rear brake caliper (36), at a position on an inner side than a side surface (23b) on a transverse directionally outer side of the swing arm (23). Therefore, the airflow guided by the air duct can be made to impinge on the front side of the rear brake caliper. In addition, with the exhaust port located on the front side of the rear brake caliper, the possibility of grounding of the air duct at the time of cornering of the saddled vehicle can be lowered.

According to the sixth feature of the present invention, the exhaust port (167) of the air duct (160) is located on a lower side of the rear brake caliper (36), at a position on an inner side than a side surface (23b) on a transverse directionally outer side of the swing arm (23). Therefore, the airflow guided by the air duct can be made to impinge on the lower side of the rear brake caliper. In addition, even in the case where the rear brake caliper is moved forward or rearward as a result of adjustment of the degree of tension of a drive chain or the like, the rear brake caliper 36 can be prevented from contacting the exhaust port.

### Brief Description of Drawings

FIG. 1 is a left side view of a motorcycle to which a brake caliper cooling structure according to an embodiment of the present invention has been applied.
FIG. 2 is a right side view of the motorcycle.
FIG. 3 is a front view of the motorcycle.
FIG. 4 is a perspective view of the swing arm as viewed from a vehicle body front lower side.
FIG. 5 is a perspective view of the rear brake caliper and a peripheral structure thereof.
FIG. 6 is a perspective view of the air duct as viewed from the vehicle body upper side.
FIG. 7 is a perspective view of the air duct 60 as viewed from the vehicle body lower side.
FIG. 8 is a partial enlarged front view of the motorcycle.
FIG. 9 is a perspective view illustrating a mounted state of an air duct according to a modification of the present embodiment.

### Modes for Carrying Out the Invention

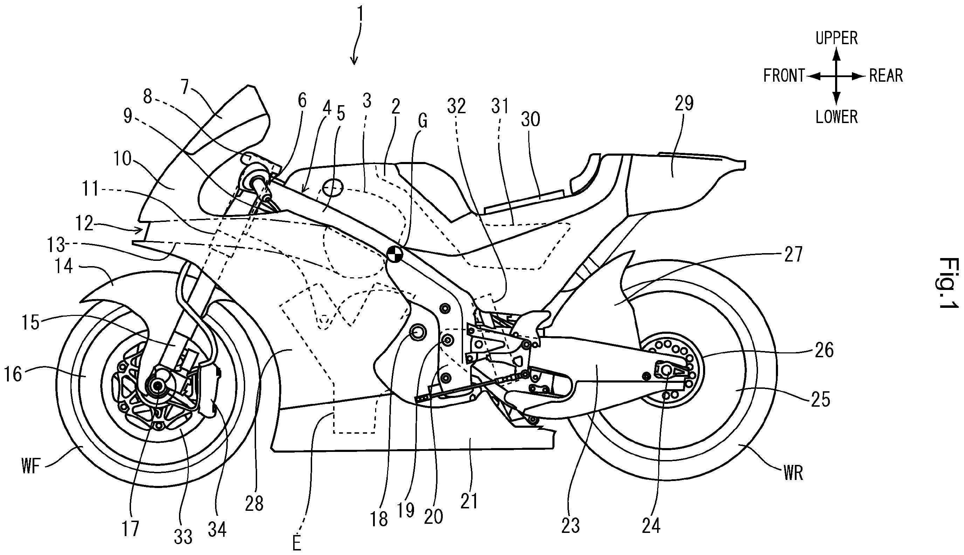

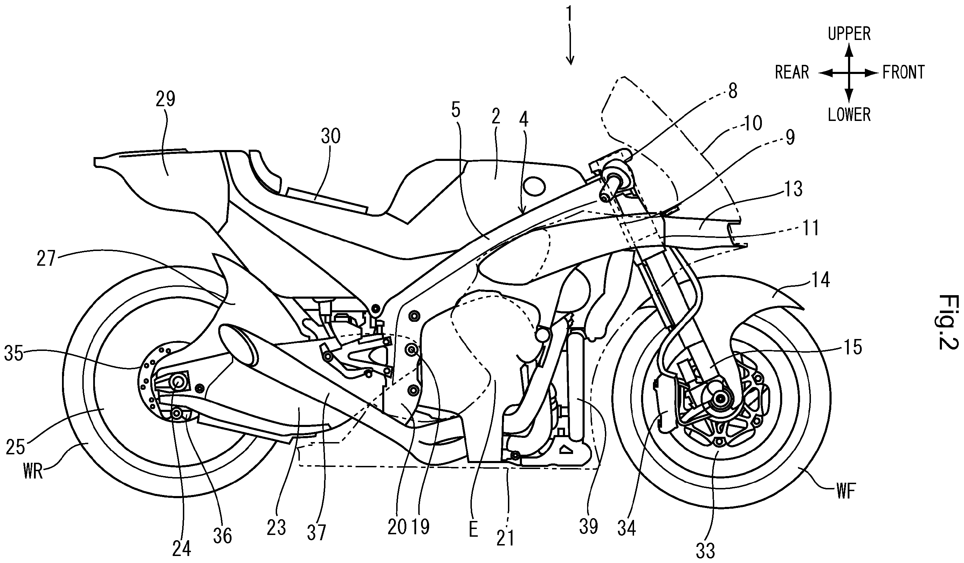

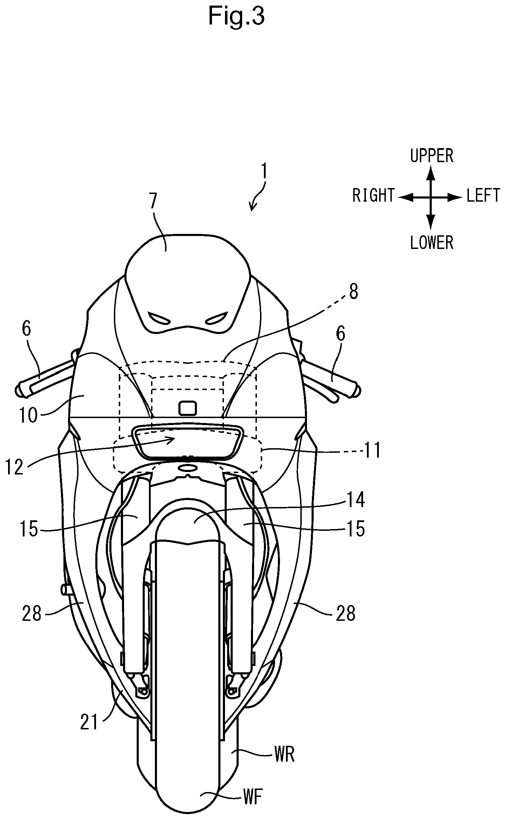

A preferred embodiment of the present invention will be described below, referring to the drawings. FIG. 1 is a left side view of a motorcycle 1 to which a brake caliper cooling structure according to an embodiment of the present invention has been applied. In addition, FIG. 2 is a right side view of the same, and FIG. 3 is a front view of the same. A body frame 4 of the motorcycle 1 as a saddled vehicle has a pair of left and right main frames 5 extending from a head pipe 9 toward a vehicle body rear side. A steering system of a front wheel WF that is shaft-supported in an oscillatable manner by the head pipe 9 includes: a pair of left and right front forks 15 shaft-supporting the front wheel WF by an axle 17; a top bridge 8 and a bottom bridge 11 that clamp the front forks 15 on the upper and lower sides of the head pipe 9; and a steering stem (not depicted) rotatably supported by the head pipe 9 while interconnecting the top bridge 8 and the bottom bridge 11. A pair of left and right brake disks 33 are fixed to a wheel 16 of the front wheel WF, and they constitute a hydraulic brake system on the front wheel WF side together with a front brake caliper 34 fixed to the front forks 15. A steering handlebar 6 is fixed to upper portions of the front forks 15.

A pair of left and right pivot plates 20 which support a pivot 19 shaft-supporting a swing arm 23 in an oscillatable manner are connected to rear lower portions of the main frames 5. A four-cycle V-type four-cylinder engine E is fixed to lower portions of the main frames 5. A combustion gas of the engine E is guided through an exhaust pipe to a muffler 37 on the transverse directionally right side. A driving force of the engine E is transmitted to a rear wheel WR shaft-supported at a rear end of the swing arm 23 in a rotatable manner.

A front cowl 10 provided with a windscreen 7 is disposed on the front side of the head pipe 9. A pair of left and right side cowls 28 are connected to the lower side of the front cowl 10, and an under cowl 21 covering a lower portion of the engine E is connected to lower end portions of the side cowls 28. A front fender 14 covering an upper portion of the front wheel WF is fixed to the front forks 15. A tank cover 2 covers upper portions of a fuel tank 31 and an air cleaner box 3 is attached to upper portions of the main frames 5. A rear cowl 29 is disposed on the rear side of a seat 30 attached to the tank cover 2. A rear fender 27 covering an upper portion of the rear wheel WR is fixed to an upper portion of the swing arm 23.

The rear wheel WR is shaft-supported in a rotatable manner by an axle 24 at a rear end portion of the swing arm 23. The driving force outputted from an output shaft 18 of the engine E is transmitted through a drive chain (not depicted) to a driven sprocket 26 fixed to a transverse directionally left side of a wheel 25 of the rear wheel WR. A brake disk 35 is fixed to a transverse directionally right side of the wheel 25 of the rear wheel WR, and it constitutes a hydraulic brake system on the rear wheel WR side together with a rear brake caliper 36 disposed on a lower side of the swing arm 23. The swing arm 23 is suspended from the body frame 4 by a rear cushion 32 disposed on the rear side of the pivot 19.

A pair of left and right air ducts 13 for guiding outside air to a lower portion of the air cleaner box 3 is disposed on transverse directionally outer sides of the main frames 5. The air ducts 13 pass on the transverse directionally outer sides of the front forks 15 to join each other on the front side of the head pipe 9, and to be connected to an opening 12 provided in the transverse directional center of the front cowl 10. A radiator 39 is disposed on a vehicle body front side of the engine E. The center of gravity G of the motorcycle 1 according to the present embodiment is located at the transverse directional center in the vicinity of rear ends of the air ducts 13.

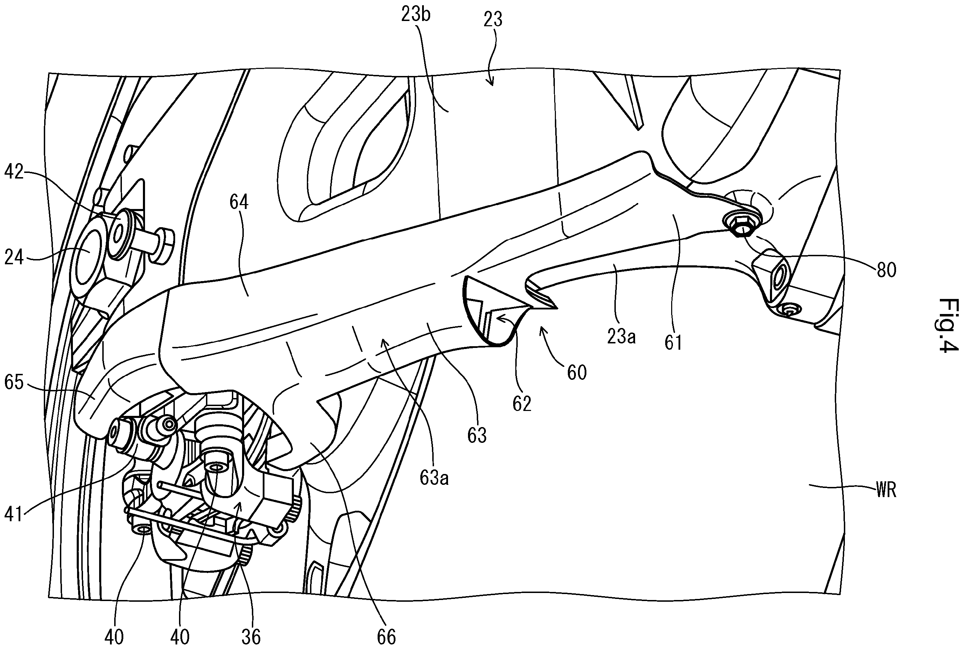

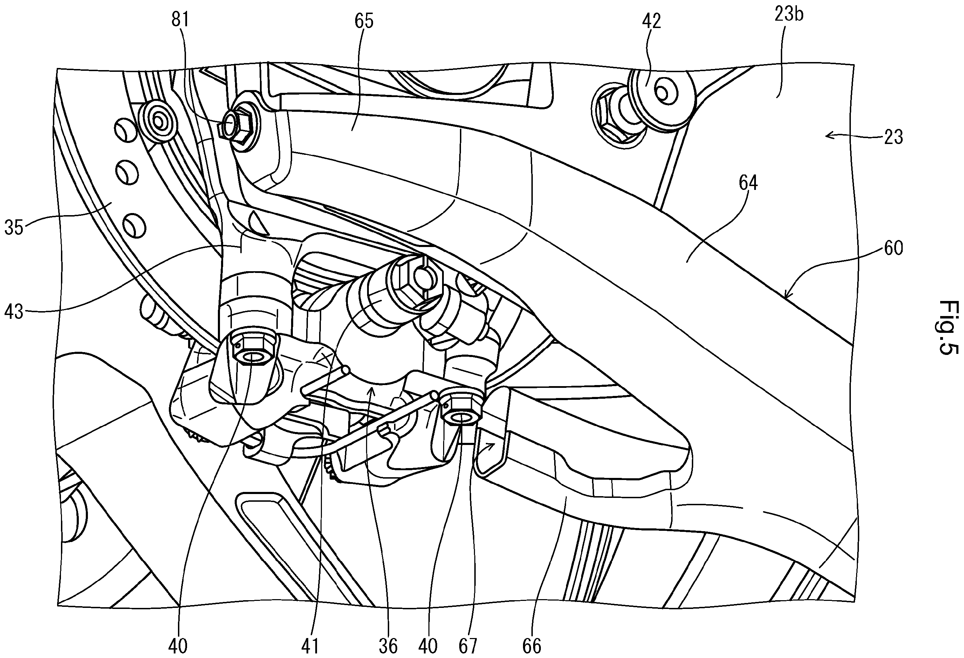

FIG. 4 is a perspective view of the swing arm 23 as viewed from a vehicle body front lower side. In addition, FIG. 5 is a perspective view of the rear brake caliper 36 and a peripheral structure thereof. The brake caliper cooling structure according to the present invention has a configuration in which airflow, induced by traveling of the vehicle, introduced from the vehicle body front side is positively guided to the rear brake caliper 36 by an air duct 60 attached to a lower surface 23a on the transverse directionally right side of the swing arm 23. The air duct 60 formed from a fiber-reinforced resin or the like functions also as a cover member that covers the lower surface 23a and part of side surfaces 23b of the swing arm 23 to protect the swing arm 23 from flying stones and the like. A pair of left and right hooks 42 for engagement with a racing stand is attached to the side surfaces 23b on the front side of the axle 24.

The rear brake caliper 36 disposed on the lower side of the swing arm 23 is fixed to a caliper bracket 43, which is disposed between the brake disk 35 and the swing arm 23 on the right side in the transverse direction, by two bolts 40 put into screw engagement from the lower side. The caliper bracket 43 is shaft-supported by the axle 24 and is defined in regard of rotational directional position by engagement with an inner wall of the swing arm 23. A hydraulic supply port 41 is provided at a side surface of the rear brake caliper 36 which is of an opposed two piston type.

The air duct 60 includes: a front portion 61 fixed to the lower surface 23a of the swing arm 23 on the vehicle body front side by a bolt 80; a rear portion 65 fixed by a bolt 81 from the vehicle body rear side while covering a rear end lower portion of the swing arm 23 on the vehicle body rear side; and a central portion 64 that interconnects the front portion 61 and the rear portion 65 and supports a passage 63 for the airflow.

The passage 63 which has a hollow structure is formed at its front end portion with an intake port 62 for the airflow. A curved passage 66 curved to the transverse directionally inner side is connected to a rear portion of the passage 63, and an exhaust port 67 is formed at a rear end portion of the curved passage 66. The exhaust port 67 is disposed in proximity to the vehicle body front side of the rear brake caliper 36. More specifically, the exhaust port 67 is disposed on the front side of a groove formed in the rear brake caliper 36 for sandwiching the brake disk 35, resulting in that the airflow impinges on the brake disk 35 and also on a friction pad (not depicted).

According to this configuration of the air duct 60, it is possible to cause the airflow to contact the rear brake caliper 36 more positively, thereby enhancing a cooling effect, and to protect the lower surface 23a and part of the side surfaces 23b of the swing arm 23 from flying stones and the like. In addition, with a cover member for protecting the swing arm 23 and an air guide passage for cooling the rear brake caliper 36 being formed integrally, increase in number of component parts can be suppressed and the vehicle body can be made lighter in weight.

An inclined surface 63a which is located on the transverse directionally inner side on the vehicle body lower side than on the vehicle body upper side is formed on the transverse directionally right side of the passage 63. This ensures that grounding of the air duct 60 is not liable to occur even when the motorcycle 1 banks deeply to the right side, and that the air duct 60 can be mounted without reducing the maximum bank angle.

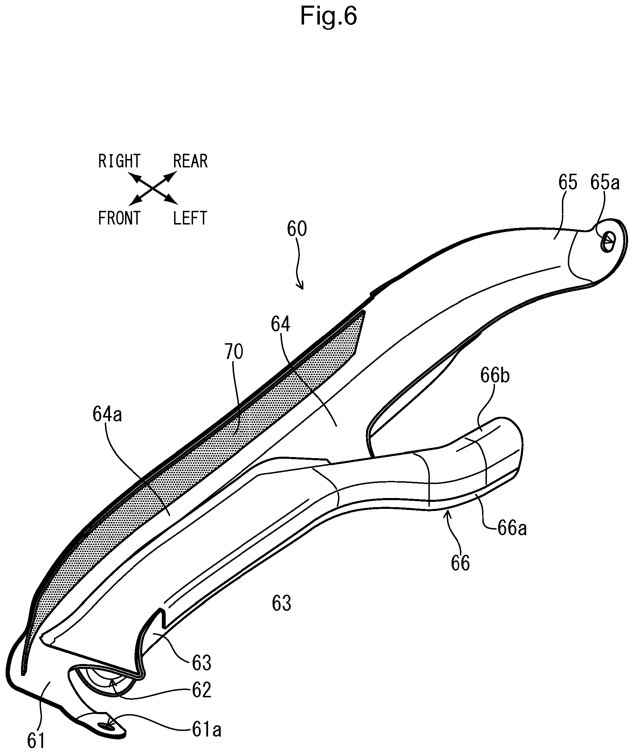

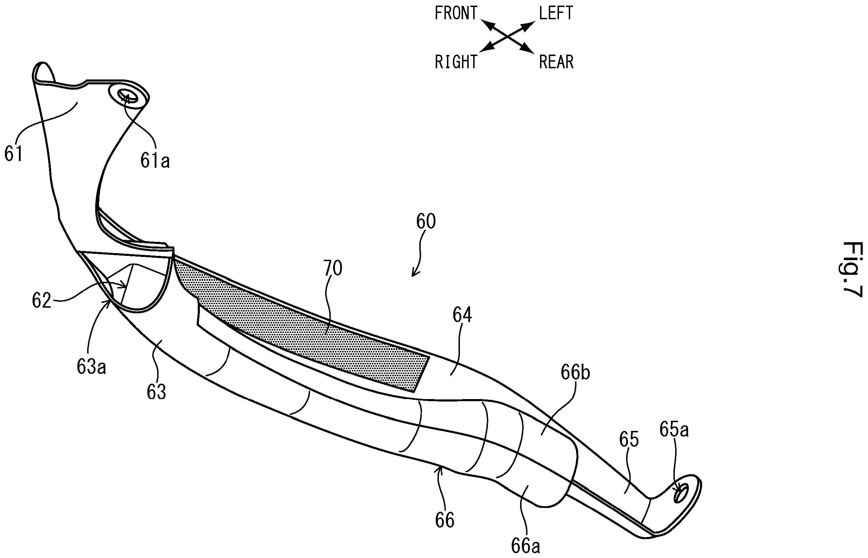

FIG. 6 is a perspective view of the air duct 60 as viewed from the vehicle body upper side. FIG. 7 is a perspective view of the air duct 60 as viewed from the vehicle body lower side. The air duct 60 is formed in a front end portion of the front portion 61 thereof with a through-hole 61a through which to pass the bolt 80, and is formed in a rear end portion of the rear portion 65 thereof with a through-hole 65a through which to pass the bolt 81. A rectangular rubber vibration insulator 70 is adhered to the inner side of a side wall 64a provided ranging from the front portion 61 to the central portion 64.

The curved passage 66, by which the airflow introduced from a lower portion of the lower surface 23a of the swing arm 23 is guided to the vehicle body front side of the rear brake caliper 36, includes a lower half 66a formed integrally with the central portion 64, and an upper half 66b connected to the central portion 64. The upper half 66b extends to the vehicle body front side to constitute also a ceiling surface of the passage 63 which contacts the lower surface 23a of the swing arm 23. According to this configuration, the passage 63 and the curved passage 66 function as an integral tube; therefore, the airflow introduced via the intake port 62 would not leak to the rear side through a gap between the air duct 60 and the swing arm 23, so that the rear brake caliper 36 can be cooled more efficiently.

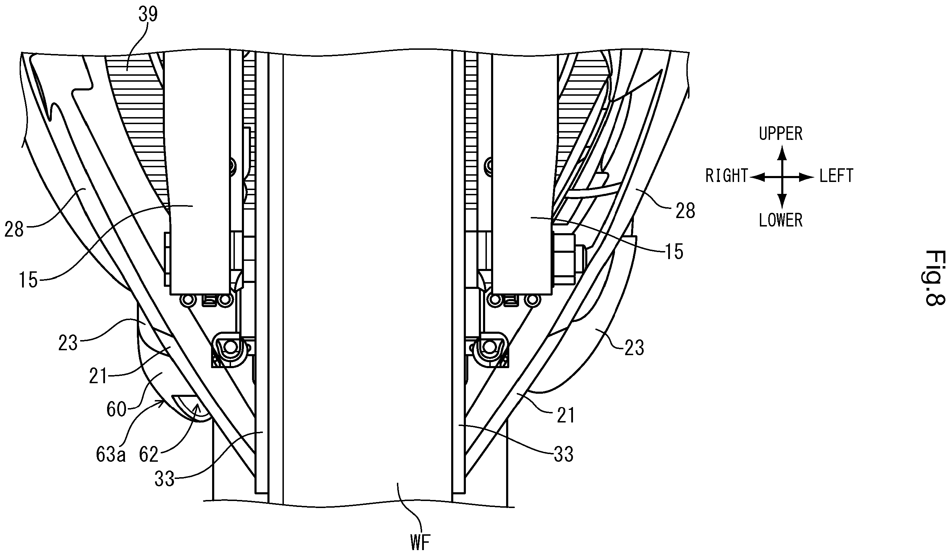

FIG. 8 is a partial enlarged front view of the motorcycle 1. The intake port 62 of the air duct 60 is located on the transverse directionally outer side of the under cowl 21 as a cowling for covering a lower portion of the engine E, in front view of the vehicle body. This ensures that no obstacle is present on the front side of the intake port 62, so that the airflow can be introduced efficiently, and, since the airflow not influenced by the heat of the engine E is introduced, a cooling effect for the rear brake caliper 36 can be enhanced. The inclined surface 63a of the air duct 60 is inclined along the outer shape of the under cowl 21, and air resistance is suppressed to a minimum.

The swing arm 23 of the motorcycle 1 has its lower surface 23a formed to extend rearwardly upward toward the vehicle body rear side (see FIG. 2). This ensures that the height size of that portion of the swing arm 23 which is near the pivot 19 is increased, rigidity thereof is enhanced, and the airflow becoming not liable to impinge on the rear brake caliper 36 due to this shape can be forcibly guided to the rear brake caliper 36 by the air duct 60. The lower surface 23a of the swing arm 23 need only have a portion which extends rearwardly upward toward the rear end of the swing arm 23; in addition to the configuration in which a portion on the vehicle body front side near the pivot 19 is formed to extend rearwardly downward as in the present embodiment, various modifications are possible such as a modification in which the whole part is formed to extend rearwardly upward, or a modification in which a step is provided in an intermediate portion.

The exhaust port 67 of the air duct 60 is located on the front side of the rear brake caliper 36, at a position on the inner side of the side surfaces 23b on the transverse directionally outer sides of the swing arm 23. This makes it possible to cause the airflow guided by the air duct 60 to impinge on the front side of the rear brake caliper 36. With the exhaust port 67 located on the front side of the rear brake caliper 36, grounding of the air duct 60 is not liable to occur at the time of cornering of the motorcycle 1.

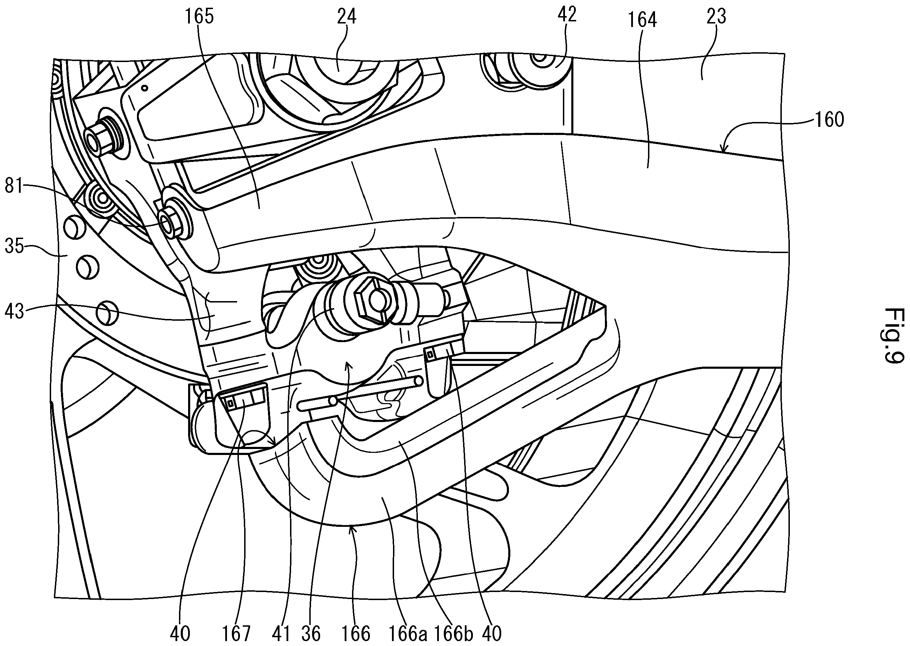

FIG. 9 is a perspective view illustrating a mounted state of an air duct 160 according to a modification of the present embodiment. The air duct 160 differs from the above-mentioned air duct 60 only in the shape of a curved passage 166 supported by a central portion 164, and a rear portion 165 fixed by a bolt 81 and a front portion (not depicted) are of the same shapes as those in the air duct 60. The curved passage 166 extends toward a rear lower side in the manner of branching from the central portion 164, and an exhaust port 167 is formed at an upper end portion bent upward on the lower side of the rear brake caliper 36. According to this configuration, the exhaust port 167 is located on the lower side of the rear brake caliper 36 at a position on the inner side of the side surfaces 23b on the transverse directionally outer sides of the swing arm 23, and, therefore, the airflow can be made to impinge on the lower side of the rear brake caliper 36. In addition, even in the case where the rear brake caliper 36 is moved forward or rearward as a result of adjustment of the degree of tension of a drive chain 22 or the like, the rear brake caliper 36 can be prevented from contacting the exhaust port 167.

According to the brake caliper cooling structure of the present invention, the air duct 60 mounted to the lower surface 23a of the swing arm 23 is provided with the intake port 62 located on the vehicle body front side of the rear wheel WR, and the exhaust port 67 disposed in the vicinity of the rear brake caliper 36. Therefore, it is possible to cause the airflow to positively contact the rear brake caliper 36 attached to the lower side of the swing arm 23, thereby to enhance a cooling effect, and to protect the lower surface 23a of the swing arm 23.

The form of the motorcycle, the shape and structure of the swing arm, the structure and layout of the rear brake caliper, the shape and material of the air duct, the shapes and layout of the intake port and the exhaust port, and the like are not limited to those in the above embodiment, and various modifications are possible within the scope of the appended claims. For example, louvers for guiding the airflow in an arbitrary direction may be provided on the inner side of the intake port and the exhaust port. A configuration in which the air duct is an integrally molded part molded from a resin or the like, or a configuration in which the rear brake caliper and the air duct are provided on the transverse directionally left side, may be adopted. The brake caliper cooling structure according to the present invention is applicable not only to motorcycles but also to three-wheeled vehicles, four-wheeled vehicles and the like that have a swing arm and a saddle. In a brake caliper cooling structure applied to a saddled vehicle (1), which includes a rear brake caliper (36) that gives a braking force to a rear wheel (WR) and a swing arm (23) that shaft-supports the rear wheel (WR) in a rotatable manner, an air duct (60) attached to a lower surface (23a) of the swing arm (23) is provided. The air duct (60) is provided with an intake port (62) located on a vehicle body front side of the rear wheel (WR), in side view of a vehicle body, and an exhaust port (67) disposed in the vicinity of the rear brake caliper (36). The intake port (62) of the air duct (60, 160) is located on the outer side of a cowling (21) that covers side surfaces of an engine (E), in front view of the vehicle body. An inclined surface (63a) is formed at a lower portion on a transverse directionally outer side of the air duct (60).

### Explanation of sign

1...motorcycle (saddled vehicle), 21...under cowl (cowling), 23...swing arm, 23a...lower surface, 23b...side surface, 24...axle, 35...brake disk, 36...rear brake caliper, 43...caliper bracket, 60, 160...air duct, 61...front portion, 62...intake port, 63...passage, 63a...inclined surface, 64...central portion, 65...rear portion, 66...curved passage, 66a...lower half, 66b...upper half, 67, 167...exhaust port, E...engine, WR...rear wheel

## Claims

1. Saddled vehicle (1) comprising a brake caliper cooling structure which includes a rear brake caliper (36) that gives a braking force to a rear wheel (WR) and a swing arm (23) that shaft-supports the rear wheel (WR) in a rotatable manner, the brake caliper cooling structure comprising:
an air duct (60, 160) attached to a lower surface (23a) of the swing arm (23) and defining a hollow passage (63),
wherein the air duct (60, 160) is provided with an intake port (62) located on a vehicle body front side of the rear wheel (WR), in side view of a vehicle body, and an exhaust port (67, 167) disposed in a vicinity of a vehicle body front side of the rear brake caliper (36),
**characterized in that** a curved passage (66) curved to the transverse directionally inner side is connected to a rear portion of the hollow passage (63), and the exhaust port (67) is formed at a rear end portion of the curved passage (66) and that the curved passage (66) includes a lower half (66a) formed integrally with a central portion (64) of the air duct (60, 160), and an upper half (66b) connected to the central portion (64), wherein the upper half (66b) extends to a vehicle body front side to constitute also a ceiling surface of the hollow passage (63) which contacts the lower surface (23a) of the swing arm (23).

2. The saddled vehicle (1) according to claim 1, wherein the saddled vehicle (1) has a cowling (21) that covers side surfaces of an engine (E) disposed between the rear wheel (WR) and a front wheel (WF), and
the intake port (62) of the air duct (60, 160) is located on an outer side of the cowling (21) in front view of the vehicle body.

3. The saddled vehicle (1) according to claim 1 or 2, wherein an inclined surface (63a) which is located on a transverse directionally inner side on a vehicle body lower side than on a vehicle body upper side is formed at a lower portion on a transverse directionally outer side of the air duct (60, 160).

4. The saddled vehicle (1) according to any one of claims 1 to 3, wherein the lower surface (23a) of the swing arm (23) has such a shape as to extend upward along a direction toward a vehicle body rear side.

5. The saddled vehicle (1) according to any one of claims 1 to 4, wherein the exhaust port (67) of the air duct (60) is located on a front side of the rear brake caliper (36), at a position on an inner side than a side surface (23b) on a transverse directionally outer side of the swing arm (23).

6. The saddled vehicle (1) according to any one of claims 1 to 4, wherein the exhaust port (167) of the air duct (160) is located on a lower side of the rear brake caliper (36), at a position on an inner side than a side surface (23b) on a transverse directionally outer side of the swing arm (23).

## Patentansprüche

1. Sattel-Fahrzeug (1), das eine Bremssattel-Kühlstruktur, die einen hinteren Bremssattel (36) enthält, der einem Hinterrad (WR) eine Bremskraft gibt, sowie ein Schwingarm (23), der das Hinterrad (WR) drehbar wellen-lagert, aufweist, wobei die Bremssattel-Kühlstruktur aufweist:
eine Luftleitung (60, 160), die an einer Unterseite (23a) des Schwingarms (23) angebracht ist und einen hohlen Kanal (63) begrenzt,
wobei die Luftleitung (60, 160) mit einer Einlassöffnung (62), die in Seitenansicht eines Fahrzeugkörpers an einer Fahrzeugkörper-Vorderseite des Hinterrads (WR) angeordnet ist, sowie eine Auslassöffnung (67, 167), die in der Nähe einer Fahrzeugkörper-Vorderseite des hinteren Bremssattels (36) angeordnet ist, versehen ist,
**dadurch gekennzeichnet, dass** ein gekrümmter Kanal (66), der zur Querrichtungs-Innenseite hin gekrümmt ist, mit einem hinteren Abschnitt des hohlen Kanals (63) verbunden ist, und die Auslassöffnung (67) an einem hinteren Endabschnitt des gekrümmten Kanals (66) ausgebildet ist, und
dass der gekrümmte Kanal (66) eine untere Hälfte (66a), die integriert mit einem mittleren Abschnitt (64) der Luftleitung (60, 160) ausgebildet ist, und eine obere Hälfte (66b), die mit dem mittleren Abschnitt (64) verbunden ist, enthält, wobei sich die obere Hälfte (66b) zu einer Fahrzeugkörper-Vorderseite hin erstreckt, um auch eine Deckfläche des hohlen Kanals (63) darzustellen, die die Unterseite (23a) des Schwingarms (23) kontaktiert.

2. Das Sattel-Fahrzeug (1) nach Anspruch 1,
wobei das Sattel-Fahrzeug (1) eine Verkleidung (21) aufweist, die Seitenflächen eines zwischen dem Hinterrad (WR) und einem Vorderrad (WF) angeordneten Motors (E) abdeckt, und
die Einlassöffnung (62) der Luftleitung (60, 160), in Vorderansicht des Fahrzeugkörpers, an einer Außenseite der Verkleidung (21) angeordnet ist.

3. Das Sattel-Fahrzeug (1) nach Anspruch 1 oder 2,
wobei eine Schrägfläche (63a), die an einer Querrichtungs-Innenseite an einer tieferen Fahrzeugkörper-Seite als die Fahrzeugkörper-Oberseite angeordnet ist, an einem unteren Abschnitt an einer Querrichtungs-Außenseite der Luftleitung (60, 160) ausgebildet ist.

4. Das Sattel-Fahrzeug (1) nach einem der Ansprüche 1 bis 3,
wobei die Unterseite (23a) des Schwingarms (23) eine derartige Form hat, die sich entlang einer Richtung zu einer Fahrzeugkörper-Rückseite hin aufwärts erstreckt.

5. Das Sattel-Fahrzeug (1) nach einem der Ansprüche 1 bis 4,
wobei die Auslassöffnung (67) der Luftleitung (60) an einer Vorderseite des hinteren Bremssattels (36), an einer Position an einer weiter inneren Seite als eine Seitenfläche (23b) an einer Querrichtungs-Außenseite des Schwingarms (23), angeordnet ist.

6. Das Sattel-Fahrzeug (1) nach einem der Ansprüche 1 bis 4,
wobei die Auslassleitung (167) der Luftleitung (160) an einer unteren Seite des hinteren Bremssattels (36) in einer Position an einer weiter innen liegenden Seite als eine Seitenfläche (23b) an einer Querrichtungs-Außenseite des Schwingarms (23) angeordnet ist.

## Revendications

1. Véhicule à selle (1) comprenant une structure de refroidissement d'étrier de frein qui inclut un étrier de frein arrière (36) qui donne une force de freinage à une roue arrière (WR) et un bras oscillant (23) qui supporte par arbre la roue arrière (WR) de manière rotative, la structure de refroidissement d'étrier de frein comprenant :
un conduit d'air (60, 160) fixé à une surface inférieure (23a) du bras oscillant (23) et définissant un passage creux (63),
dans lequel le conduit d'air (60, 160) est doté d'un orifice d'admission (62) situé sur un côté avant de corps de véhicule de la roue arrière (WR), en vue de côté d'un corps de véhicule, et un orifice d'échappement (67, 167) disposé à proximité d'un côté avant de corps de véhicule de l'étrier de frein arrière (36),
**caractérisé en ce qu'**un passage (66) courbé vers le côté intérieur en direction transversale est raccordé à une portion arrière du passage creux (63), et l'orifice d'échappement (67) est formé au niveau d'une portion d'extrémité arrière du passage courbé (66) et que le passage courbé (66) inclut une moitié inférieure (66a) formée d'un seul tenant avec une portion centrale (64) du conduit d'air (60, 160), et une moitié supérieure (66b) raccordée à la portion centrale (64), dans lequel la moitié supérieure (66b) s'étend jusqu'à un côté avant de corps de véhicule pour constituer aussi une surface de plafond du passage creux (63) qui touche la surface inférieure (23a) du bras oscillant (23).

2. Véhicule à selle (1) selon la revendication 1,
dans lequel le véhicule à selle (1) présente un capot (21) qui couvre des surfaces latérales d'un moteur (E) disposé entre la roue arrière (WR) et une roue avant (WF), et
l'orifice d'admission (62) du conduit d'air (60, 160) est situé sur un côté extérieur du capot (21) en vue de face du corps de véhicule.

3. Véhicule à selle (1) selon la revendication 1 ou 2, dans lequel une surface inclinée (63a) qui est située sur un côté intérieur en direction transversale sur un côté inférieur de corps de véhicule par rapport à un côté supérieur de corps de véhicule est formée au niveau d'une portion inférieure sur un côté extérieur en direction transversale du conduit d'air (60, 160).

4. Véhicule à selle (1) selon l'une quelconque des revendications 1 à 3, dans lequel la surface inférieure (23a) du bras oscillant (23) présente une forme telle qu'elle s'étend vers le haut le long d'une direction vers un côté arrière de corps de véhicule.

5. Véhicule à selle (1) selon l'une quelconque des revendications 1 à 4, dans lequel l'orifice d'échappement (67) du conduit d'air (60) est situé sur un côté avant de l'étrier de frein arrière (36), à une position sur un côté intérieur par rapport à une surface latérale (23b) sur un côté extérieur en direction transversale du bras oscillant (23).

6. Véhicule à selle (1) selon l'une quelconque des revendications 1 à 4, dans lequel l'orifice d'échappement (167) du conduit d'air (160) est situé sur un côté inférieur de l'étrier de frein arrière (36), à une position sur un côté intérieur par rapport à une surface latérale (23b) sur un côté extérieur en direction transversale du bras oscillant (23).
